Europäisches Patentamt

European Patent Office

Office européen des brevets

(11) Publication number: **0 162 400**
**B1**

(12) EUROPEAN PATENT SPECIFICATION

(45) Date of publication of patent specification: **26.07.89**

(21) Application number: **85105880.0**

(22) Date of filing: **13.05.85**

(51) Int. Cl.⁴: **A 47 C 31/02, B 60 N 1/00**

(54) Seat, particularly for vehicles, with upholstery ties of improved type.

(30) Priority: **22.05.84 IT 5341784 u**

(43) Date of publication of application:
**27.11.85 Bulletin 85/48**

(45) Publication of the grant of the patent:
**26.07.89 Bulletin 89/30**

(84) Designated Contracting States:
**DE FR GB SE**

(56) References cited:
**DE-A-1 909 235**
**DE-A-2 201 023**
**DE-A-3 037 834**
**DE-A-3 043 501**
**DE-A-3 212 569**
**DE-B-1 942 308**
**FR-A-2 052 722**
**FR-A-2 452 266**
**US-A-2 006 218**
**US-A-2 722 691**
**US-A-3 517 963**
**US-A-3 630 572**
**US-A-4 232 899**
**US-A-4 317 591**
**US-A-4 452 488**

(73) Proprietor: **FIAT AUTO S.p.A.**
**Corso Giovanni Agnelli 200**
**I-10135 Torino (IT)**

(72) Inventor: **Ghione, Giulio**
**Via Monsignor Savio 4**
**I-12037 Saluzzo (IT)**
Inventor: **Stacchino, Giuseppe**
**Via Tiepolo, 10**
**I-10024 Moncalieri (IT)**

(74) Representative: **Bongiovanni, Guido et al**
**c/o Ingg. Carlo e Mario Torta Via Viotti 9**
**I-10121 Torino (IT)**

Courier Press, Leamington Spa, England.

## Description

This invention relates to a seat, particularly for vehicles, of the type comprising a padding, an outer covering and upholstery ties of improved type for keeping the outer covering adhering to the padding. In vehicle seats of known type, the seat covering, whether of leather, plastics or fabric, is kept adhering to the padding, usually of foamed plastics construction, by means of a plurality of upholstery ties substantially in the form of wires or cables which are sewn at one end to the inner surface of the outer covering, are passed through the padding, for example by inserting them through suitable holes formed through it, and are then manually pulled to a predetermined extent and tied and/or fixed in any other suitable manner to any element of the seat supporting structure, for example to one of the cross-members of the seat back-rest. The various upholstery ties are subjected to different degrees of tension so as to pull the outer covering against the padding with greater or lesser force in order to determine the shape of the seat and also ensure adherence between the covering and padding in those zones in which this latter is strongly profiled.

Seats of the aforesaid type have the drawback of not possessing any reference element or device for the operator manually assembling the seat which would enable him to give each upholstery tie the correct amount of pull. It is therefore apparent that in seats of known type, the various ties are mounted and pulled in an arbitrary manner by the assembler, with the result that some of them are left loose because of insufficient tension, with consequent poor adhesion of the covering to the padding, and some are pulled excessively, giving rise to excessive stressing of the constituent material of the covering and/or ties, with the risk of the padding, or part of it, assuming an incorrect shape. These drawbacks, even if present at a level invisible to the naked eye, in any case lead to a large reduction in the seat comfort and can cause internal stresses which produce accelerated wear thereof. Finally, as known ties are usually fixed to the seat framework by tying, the operator finds considerable difficulty in mounting them by virtue of the fact that he has to keep the tie pulled while simultaneously tying it. Consequently, known seats require a relatively long assembly time. The aforedescribed drawback are partly overcome by ties realized according to US 3,630,572. These ties are already cut at a predetermined length, are sewn at one end to the inner surface of the outer covering and are provided at the other end with hook means to engage a cross-member of the supporting structure of the seat. In this manner the connection of the ties to the seat frame is easy and each tie should remain pulled at a correct degree of tension. Nevertheless, also a seat realized according to US 3,630,572 is complex to assembly and requires a relatively long assembly time. In fact, in order to ensure their correct tension, the ties have to be realized of different length with respect to each other and are to be mounted in particular positions, so that the operator has to distinguish the ties from each other during the assembly, putting each tie in a predetermined position. It is easy to understand that such a way of assembly is very slow and requires a considerable attention. Furthermore, if some times are mounted in incorrect positions they don't receive the correct tension so that the risk of obtaining a large reduction of the seat comfort is not eliminated.

The object of the present invention is to provide a seat of the aforesaid type, particularly for vehicles, of which the assembly is simple and rapid for the operator concerned, and in which each tie used for assembling the seat can be subjected manually to the correct degree of tension. This object is attained according to the present invention by a seat, particularly for vehicles, of the type comprising a padding, an outer covering and a plurality of upholstery ties which keep said outer covering adhering to said padding, wherein each of said ties comprises first fixing means, disposed at one of its ends, for connecting said tie to the inner surface of said outer covering, and second fixing means, for connecting the tie to a framework element of said seat which is itself provided with connection means in order to enable each of said ties to be connected to said framework element under predetermined tension characterized in that said second fixing means of each of said ties are disposed at predetermined intervals along the entire length of each tie and are arranged to be engaged selectively by said connection means of said framework element, said second fixing means consisting in a plurality of connection elements rigid with each of said ties and spaced apart by predetermined intervals, only one of said connection elements of each of said ties cooperating with said connection means of said framework element.

The present invention will be more apparent from the non-limiting description given hereinafter of one embodiment thereof with reference to the accompanying drawings, in which:

Figure 1 is a partly sectional cut-away perspective view of a seat constructed in accordance with the present invention; and

Figures 2 and 3 show two respective details of the seat of Figure 1 to an enlarged scale.

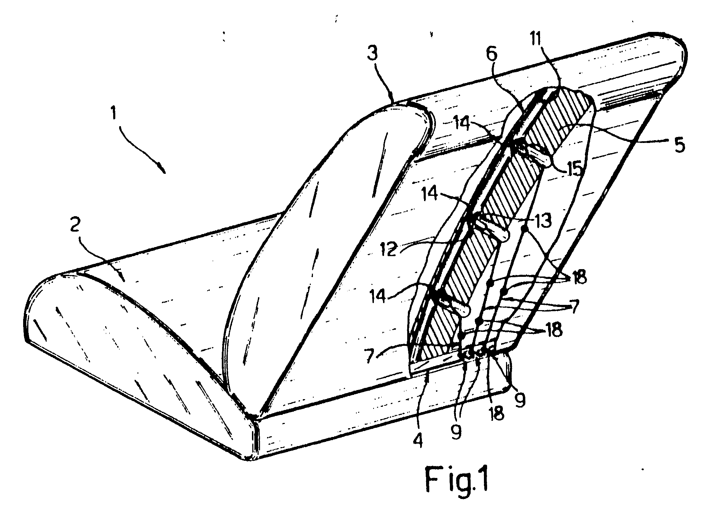

In Figure 1, the reference numeral 1 indicates overall a seat, particularly for a vehicle of any known type, not shown for simplicity, composed of a cushion assembly 2 and a back-rest 3 and comprising a rigid support framework of any known type, not shown for simplicity, but of which a lower cross-member 4 forming part of the back-rest 3 is visible in the cut-away portion, an elastically deformable padding 5 of any known type, for example constituted by a foamed synthetic plastics resin moulded to a suitable shape, and an outer covering 6 of any known type formed from sheet material, for example constituted by a synthetic plastics resin, leather and/or fabric, which rests on the padding 5 and is fixed rigidly thereto by means of a plurality of upholstery ties 7 fixed in any convenient manner at one end to said covering 6, and at their other end to any element of said rigid framework of the seat 1, for example to the cross-member 4.

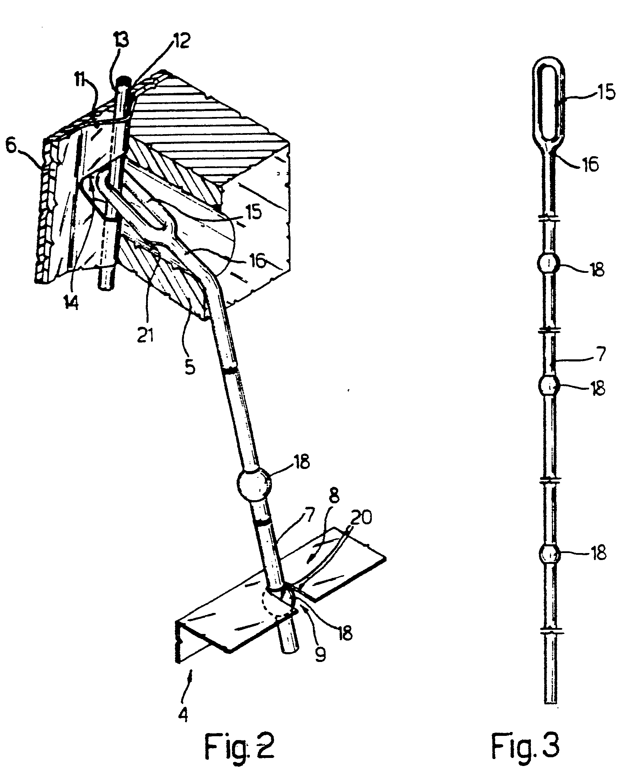

According to the invention, and with reference also to Figures 2 and 3, the framework cross-member 4 comprises a projecting flange or ledge 8, constituted for examle by an angle section, and a plurality of slots 9, of number equal to at least one for each tie 7, which pass completely through the ledge 8 and are disposed side-by-side transversely to the longitudinal axis of said cross-member 4, spaced apart by a predetermined distance. Preferably, the slots 9 are rectilinear and are open at one end. The ledge 8 is consequently substantially flat and substantially of comb configuration. The ties 7, usually six in number, three for each side of the seat 1, are fixed in any convenient manner to the inner surface 11 of the covering 6. According to the invention, and as can be seen in Figure 2, the covering 6 is provided on its inner surface 11 with a plurality of fabric sleeves 12 which are sewn to the covering 6 or formed integrally with it, and are each provided internally with a metal wire or cable 13.

The cables 13 are therefore rigidly connected to the inner side of the covering 6 inside the sleeves 12, and are exposed in predetermined positions, so as to make them accessible, by way of respective apertures 14 formed through said sleeves 12, preferably by cutting a portion thereof. The ties 7 are each connected rigidly to the covering 6 at each aperture 14 by means of a respective eyelet 15 which engages the corresponding metal wire or cable 13. With reference also to Figure 3, each tie 7 is constituted according to the invention by a substantially cylindrical flexible cable provided at its upper end 16 with the respective eyelet 15 and also provided, at regular and predetermined intervals along its entire length, with connection and fixing elements 18 arranged to engage the slots 9 in such a manner as to connect the ties or cables 7 to the cross-member 4. In particular, according to the invention said connection elements 18 are constituted by respective spherical enlargements coaxial with the tie and integral therewith, and arranged to cooperate in the manner of stops with respective lower facing edges 20 of each slot 9. Preferably the eyelets 15 are also formed integrally with the respective ties 7, and in order to enable the ties 7 to pass through the padding 5, this latter is provided with respective through slots 21 provided in positions corresponding with the apertures 14 in the sleeves 12 of the covering 6. The seat 1 according to the invention is assembled in the following manner.

The ties 7 are firstly fixed off the production line to the surface 11 of the covering 6 by initially forming the apertures 14 by cutting the sleeves 12 at predetermined points, for example in positions corresponding with the stitching of the covering 6, and then inserting the cables 13 one at a time into the sleeves 12 in such a manner that the eyelets 15 of the respective ties 7 simultaneously engage the cable 13 when the upper end of each cable 13 reaches a respective aperture 14. When each cable 13 has been completely inserted into the respective sleeve 12, the ties 7 will thus all be connected to the cables 13, which will in their turn be connected to the covering 6 by way of the sleeves 12.

The seat 1 is then assembled on the production line by mounting the coverin 6 over the padding 5 and fixing the covering. These operations are carried out by manually passing the ties 7 through the slots 23 simultaneously with the mounting of the covering 6 over the padding 5, then manually pulling the ties 7 one at a time before this mounting is complete, and fixing the ties to the cross-member 4 by inserting them into the slots 9 so that one of the stop elements 18 is in a position immediately below the ledge 8, so that one element 18 of each tie 7 cooperates with the lower edges 20 of the respective slot 9 into which said tie 7 is inserted. The mounting of the covering 6 is then completed, and that part of the ties 7 hanging below the cross-member 4 is cut-off.

The advantages of the seat constructed in accordance with the invention are apparent from the description. Because of the presence of the stop elements 8 on the ties 7 and the relative system for connecting these latter to the framework fixing element, constituted for example by the cross-member 4, it is possible to assemble the seat and in particular to fix the cover to the padding in a rapid and simple manner, without the operator having to carry out the troublesome and lengthy operation of having to tie the ties to the framework. Fixing the ties to the covering is also easy and rapid, and the connections are highly reliable.

Finally, each tie is ensured of correct tension, thus leading to perfect seat comfort and high adhesion of the covering to the padding. This is because as the elements 18 are widely spaced apart it is not possible to make assembly errors in that if the operator should try to insert into the slot 9 an element 18 other than the correct one which by virtue of its axial position ensures uniform tension of the ties 7, the relative tie would remain either completely slack or would not be able to be pulled without tearing the covering 6. Finally, from the description it is apparent that modifications can be made to the seat according to the invention without leaving the scope of the invention itself. For example, any framework element other than the cross-member 4 can be used for fixing the ties 7, and the elements 18 for connecting the ties 7 to the cross-member can be replaced by other elements performing the same function, but of completely different form, for example a plurality of eyelets arranged to engage a plurality of hooks and/or connection elements projecting from the cross-member 4. The ties 7 can also be fixed to the covering 6 in any other suitable known manner.

## Claims

1. A seat (1), particularly for vehicles, of the type comprising a padding (5), an outer covering (6) and a plurality of upholstery ties (7) which keep said outer covering (6) adhering to said padding (5), wherein each of said ties (7) comprises first fixing means (15), disposed at one of its ends (16), for connecting said tie (7) to the inner surface (11) of said outer covering (6), and second fixing means (18), for connecting the tie (7) to a framework element (4) of said seat (1) which is itself provided with connection means (9) arranged to cooperate with said second fixing means (18) in order to enable each of said ties (7) to be connected to said framework element (4) under predetermined tension, characterized in that said second fixing means (18) of each of said ties (7) are disposed at predetermined intervals along the entire length of each tie and are arranged to be engaged selectively by said connection means of said framework element (4), said second fixing means (18) consisting in a plurality of connection elements (19) rigid with each of said ties and spaced apart by predetermined intervals, only one of said connection elements (19) of each of said ties (7) cooperating with said connection means (9) of said framework element (4).

2. A seat (1) as claimed in claim 1, characterized in that said framework element is a cross-member (4) comprising a plurality of slots (9), the number of which is equal to at least one for each of said upholstery ties (7) and which pass completely through it in side-by-side positions and are arranged to be engaged by said ties (7).

3. A seat (1) as claimed in claim 2, characterized in that said slots (9) are open at one end.

4. A seat as claimed in claim 2 or 3, characterized in that each of said ties (7) is constituted by a flexible cable which is provided at its upper end (16) with an eyelet (15) engaging a corresponding connection element (13) fixed rigidly to said inner surface (11) of said outer covering (6), and which is also provided along its entire length with said plurality of said connection elements (19); said one of said connection elements (19) cooperating with said connection means (9) of said framework element (4) engaging with corresponding facing lower edges (20) of the corresponding respective said slot (9) engaged by said tie (7) in order to keep this latter connected to said cross-member (4).

5. A seat as claimed in claim 1, characterized in that said connection elements are constituted by respective spherical enlargements (18) provided along said tie (7), which is substantially cylindrical.

## Patentansprüche

1. Sitz (1) im besonderen für Fahrzeuge, in der Art, die besteht aus einer Polsterung (5), einer äußeren Verkleidung (6) und mehreren Bändern (7), die die Haftung der besagten äußeren Verkleidung (6) an der besagten Polsterung (5) ermöglichen, jedes dieser besagten Bänder (7) ist mit ersten Haftvorrichtungen (15) versehen, an einem ihrer Endpunkte (16) angebracht, um das besagte Verbindungselement (7) an der internen Oberfläche (11) der besagten äußeren Verkleidung (6) zu befestigen, und zweiteren Haftvorrichtungen (15), um das Verbindungselement (7) an einem Element des Rahmens (4) des besagten Sitzes (1) zu befestigen, welches dasselbe Verbindungselement besitzt (9), in der Lage, mit den besagten zweiteren Haftvorrichtungen (18) zusammenzuwirken, um jedem der besagten Bänder (7) zu ermöglichen, mit den besagten Element des Rahmens (4) verbunden zu sein, mit einer vorbestimmten Spannung, die dadurch gekennzeichnet ist, daß die besagten zweiteren Haftvorrichtungen (18) eines jeden der besagten Bänder (7) in vorbestimmten Abständen an der internen Längsseite eines jeden Verbindungselements angebracht sind und damit wahlweise in die besagten Verbindungselemente des besagten Elements des Rahmens (4) eingehängt werden können, die besagten zweiteren Haftvorrichtungen (18), die aus mehreren Verbindungselementen bestehen (19), sind steif in Bezug auf jedes der besagten Bänder und durch vorbestimmte Abstände voneinander getrennt, lediglich eines der besagten Verbindungselemente (19) eines jeden der besagten Bänder (7) wirkt mit den besagten Verbindungselementen (9) des besagten Elements (4) des Rahmens zusammen.

2. Sitz (1) nach Anspruch 1, dadurch gekennzeichnet, daß das besagte Element des Rahmens eine Querverbindung (4) ist, bestehend aus mehreren Nuten (9), deren Anzahl mindestens mit der der besagten Bänder der Verkleidung (7) übereinstimmt und die vollständig durch diese führen, nebeneinander, und die so angebracht sind, daß die besagten Bänder (7) eingehängt werden können.

3. Sitz (1) nach Anspruch 2, dadurch gekennzeichnet, daß die besagten Nuten (9) nach einer Seite hin geöffnet sind.

4. Sitz nach Anspruch 2 oder 3, dadurch gekennzeichnet, daß jedes der besagten Bänder (7) aus einem flexiblen Kabel besteht, das an seinem oberen Ende (16) eine Öse (15) hat, in die ein entsprechendes Verbindungselement eingehängt wird (13), fest verbunden mit der besagten Oberfläche (11) der besagten äußeren Verkleidung (6), und das ebenfalls an seiner Längsseite entlang mit besagter Vielzahl an besagten Verbindungselementen (19) versehen ist; das besagte unter den besagten Verbindungselement (19) wirkt mit den besagten Verbindungselementen (9) des besagten Elements des Rahmens (4) zusammen, eingehängt an den entsprechenden, weiter unten gegenüberliegenden Kanten (20) der besagten, entsprechend gegenüberliegenden Nut (9), eingehängt am besagten Verbindungselement (7), um die Verbindung zwischen diesem letzteren und der Querverbindung (4) aufrechtzuerhalten.

5. Sitz nach Anspruch 1, dadurch gekennzeich-

EP 0 162 400 B1

net, daß die besagten Verbindungselemente aus entsprechend kugelförmigen Vergrößerungen (18) bestehen, die sich entlang des besagten Verbindungselements (7) befinden, welches grundsätzlich zylindrisch ist.

**Revendications**

1. Siège (1), en particulier pour véhicules, du type comprenant un rembourrage (5), un revêtement extérieur (6) et une pluralité de cordons de rembourrage (7) qui assurent l'adhérence dudit revêtement extérieur (6) sur ledit rembourrage (5), dans lequel chacun desdits cordons (7) comprend des premiers moyens de fixation (15) disposés à l'une de ses extrémités (16), pour raccorder ledit cordon (7) à la surface intérieure (11) dudit revêtement extérieur (6) et des seconds moyens de fixation (18), pour raccorder le cordon (7) à un élément de châssis (4) dudit siège (1) qui est lui-même pourvu de moyens de fixation (9), agencé pour coopérer avec lesdits seconds moyens de fixation (18) afin de permettre à chacun desdits cordons (7) d'être reliés audit élément de châssis (4) sous une tension prédéterminée, caractérisé en ce que lesdits moyens de fixation (18) de chacun desdits cordons (7) sont disposés à intervalles prédéterminés le long de la longueur entière de chaque cordon et sont disposés pour venir en prise sélective avec lesdits moyens de raccordement dudit élément de châssis (4), lesdits seconds moyens de fixation (18) consistant en une pluralité d'éléments d'assemblage (19) rigides avec chacun desdits cordons et espacés entre eux à intervalles prédéterminés, l'un desdits éléments d'assemblage (19) seulement de chacun desdits cordons (7) coopérant avec lesdits moyens de fixation (9) dudit élément de châssis (4).

2. Siège (1), selon la revendication 1, caractérisé en ce que ledit élément de châssis est une traverse (4) comprenant une pluralité de fentes (9) dont le nombre est égal à un au moins pour chacun desdits cordons de rembourrage (7) et qui passent totalement au travers de ceux-ci en position côte-à-côte et sont disposées pour venir en prise avec lesdits cordons (7).

3. Siège (1), selon la revendication 2, caractérisé en ce que lesdites fentes (9) sont ouvertes à une extrémité.

4. Siège selon la revendication 2 ou 3, caractérisé en ce que chacun desdits cordons (7) est constitué par un câble souple qui est pourvu, à son extrémité supérieure (16), d'un oeillet (15) venant en prise avec un élément d'assemblage correspondant (13), fixé rigidement à ladite surface intérieure (11) dudit revêtement extérieur (6) et qui est également pourvu, sur toute sa longueur, d'une pluralité desdits éléments d'assemblage (19); l'un desdits éléments d'assemblage (19) coopérant avec ledit moyen de fixation (9) dudit élément de châssis (4) s'engageant sur les bords inférieurs dirigés de façon correspondante (20) de ladite fente respective correspondante (9) recevant ledit cordon (7) afin de maintenir ce dernier relié à ladite traverse (4).

5. Siège selon la revendication 1, caractérisé en ce que lesdits éléments de fixation sont constitués de parties sphériques plus grandes correspondantes (18) disposées le long dudit cordon (7), qui est sensiblement cylindrique.

Fig.1

Fig. 2

Fig. 3